# EUROPEAN PATENT APPLICATION

(11) **EP 1 598 220 A2**
(43) Date of publication of application: **23.11.2005**
(21) Application number: 05104364.4
(22) Date of filing: 23.05.2005
(51) Int. Cl.: B60C 23/04

(54) **A process and device for incorporating electronics into a tire**

(30) Priority: 21.05.2004 US 850922
(71) Applicant: Société de Technologie Michelin, 63000 Clermont-Ferrand (FR); MICHELIN RECHERCHE ET TECHNIQUE S.A., 1763 Granges-Paccot (CH)
(72) Inventor: Adamson, John David, 63000 Clermont-Ferrand (FR)
(74) Representative: Dequire, Philippe Jean-Marie Denis

(57) **Abstract**

A patch (20) having integrated electronics and positioned within the structure of a tire is provided. A process for integrating such patch within a tire is also provided. The patch is placed within the tire structure as opposed to resting on a tire surface. The patch may be attached within the tire structure using adhesives or may be bonded within the tire structure through a curing process.

## Description

### TECHNICAL FIELD OF THE INVENTION

The present invention relates generally to a patch having integrated electronics that is positioned within the structure of a tire and a process for integrating such patch within a tire. The patch is placed within the tire structure as opposed to resting on a tire surface. The patch may be attached within the tire structure using adhesives or may be bonded within the tire structure through a curing process.

### BACKGROUND

Electronics can be utilized with tires in a variety of useful applications. For example, electronics can be provided to monitor and transmit information about the physical conditions of the tire such as temperature, pressure, movement and other conditions. Circuitry can also be configured to provide for identification of the tire as part of, for example, a monitoring program or an inventory control system.

Difficulties are encountered in coupling electronics with tires. A tire typically experiences a variety of forces and other physical conditions during mounting of the tire and during tire operation. As a result, one complexity encountered in coupling a tire and an electrical circuit is protecting the circuitry from damage during manufacturing and use. Additionally, for certain applications, it may also be desirable to protect the circuitry from tampering or aftermarket modifications.

The application of the circuitry may also require that it be positioned in a portion of the tire that will experience repeated deformation as the tire rotates. For example, important information about tire performance could be obtained by measuring internal forces, strains, and temperatures during operation. In some applications, such measurements require that the associated electronics be physically located within the tire structure where the measurement will be taken, which in turn presents manufacturing problems such as protecting the circuitry from damage during manufacturing and use, and maintaining the proper orientation of the circuitry in the finished tire product.

### SUMMARY

The present invention provides certain advantages in view of the above-described difficulties. Additionally, other objects and advantages of the invention will be set forth in part in the following description, or may be obvious from the description, or may be learned through practice of the invention.

The present invention provides both a patch for providing a tire with integrated electronics and a process for integrating such patch into the tire. More specifically, the present invention provides a patch that is used to integrate an electrical circuit within a tire structure. The manufacturer can determine the desired electronics and the position of the patch within the tire based on considerations such as application, use, and other factors. The desired electronics can be embedded within the patch, attached to its surface, or both. The patch of the present invention is actually incorporated into the tire structure and is not placed on the surface of the tire.

The present invention provides numerous advantages in application. For example, because the patch is integrated into the structure of the tire, electronics carried by the patch cannot be removed without destroying the tire, and the tire structure otherwise provides additional protection during shipping and use. In embodiments where the electronics are embedded within the patch, the present invention also offers protection for the electronics during the manufacturing process. Because the patch is embedded within the tire, the present invention provides for locating electronics within the tire at positions where forces, strains, temperatures, and other physical parameters may be measured during tire operation. By way of further example, in certain embodiments the present invention provides an electronics patch that can be configured to maintain a predetermined shape during tire building and curing. This may be desirable, for example, where a certain orientation or shape is required for proper operation of the circuitry. Because the electronics can be embedded within the patch in certain embodiments, the thickness of the patch can be closely controlled in order to provide the required electrical insulation between the electronics within the patch and the otherwise conductive materials used in the tire's construction. Using the teachings disclosed herein, one of ordinary skill in the art will understand that these and other advantages may be realized through application of the present invention.

The present invention provides a process for integrating an electronic device into a tire. A rubber patch is provided that is configured for placement within a tire. The patch may include one or more pieces of rubber that will be combined to create the patch. Preferably, the patch may be constructed from a silica-reinforced rubber or elastomer. It may also comprise a variety of materials including aramid, polyester, polyimide, rayon, nylon, foam rubber or elastomer, steel, fiberglass, and TEFLON® in order to reinforce it or adjust its rigidity. An electrical circuit for use with the tire is also provided. Numerous different circuits may be selected and used as previously discussed; the circuit may include an electromechanical transducer element for providing power. The electrical circuit is incorporated with the patch. For example, the circuit may be embedded within the patch or, alternatively, may reside entirely or partially upon the surface of the rubber patch. The rubber patch is then at least partially cured, which may serve to provide shape to the patch and/or unite pieces of the patch together into a single piece. The patch is then embedded within the architecture of the tire at a location determined, for example, by the application or intended use of the incorporated electronics. By way of example only, the patch may be placed between the inner liner and the remaining architecture of the tire. Alternatively, the patch may be placed in the crown region of the tire at a position adjacent to the tread region. The tire is then cured so as to provide an integrated structure that includes both the patch and the tire. Depending on the materials used, this curing step may further bond the patch to the surrounding materials of the tire's structure. Alternatively, the process of the invention may comprise the step of applying an adhesive to the patch in order to bond the surface of the patch to the tire materials.

As previously stated, in addition to providing a process for including a patch with electronics into a tire, the present invention also provides a patch with incorporated electronics for embedding within a tire. For example, in one such exemplary embodiment, the present invention provides a tire having integrated electronics in which the tire's architecture includes a pair of sidewall portions, a crown section, and a tread section. A patch is enclosed within a portion of the tire architecture, and an electrical circuit is incorporated with said patch. The electrical circuit is constructed according to the desired application and may include an electromechanical transducer element for converting mechanical energy into electrical energy to power the circuit. The patch may be positioned in numerous locations within the tire. For example, the patch may be positioned in the crown section of the tire or may be placed into one of the pair of sidewall portions. To secure its position, the patch may be bonded to the tire using an adhesive, a curing step, or a combination of both. The patch may be constructed from any one or more of a variety of materials including, as previously listed, rubber or elastomer, silica-reinforced rubber, aramid, polyester, polyimide, rayon, nylon, foam rubber, steel, fiberglass, and TEFLON®.

In still another exemplary embodiment of the present invention, an apparatus for use in incorporating electronics into a tire is provided that includes a patch having a slim profile. The patch is made of a substantially electrically insulating material and is configured for being embedded inside of a tire. An electrical circuit is carried by the patch. The circuit can be embedded within the patch of placed partially or completely upon the surface of the patch. The electrical circuit is configured for communicating with a remote location and, as such, may include one or more antennas. The structure of the patch, including the materials used for its construction, helps to reduce dissipation between the electrical circuit and the tire when the patch is embedded inside of the tire.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present subject matter, including the best mode thereof, directed to one of ordinary skill in the art, is set forth in the specification, which makes reference to the appended figures, in which:

FIGS. 1A and 1B are a top view and a side view, respectively, of an exemplary embodiment of a patch according to the present invention.

FIGS. 2A and 2B are a top view and a side view, respectively, illustrates another exemplary embodiment of a patch according to the present invention.

FIG. 3 is a partial cross-sectional view of a tire that illustrates an exemplary embodiment of the present invention in which a patch is incorporated into a sidewall portion of the tire.

FIG. 4 is a partial cross-sectional view of a tire that illustrates an exemplary embodiment of the present invention in which a patch is incorporated into the crown of the tire.

Repeat use of reference characters throughout the present specification and appended drawings is intended to represent same or analogous features or elements of the invention.

### DETAILED DESCRIPTION OF PREFERRED EMBODIMENTS

The present invention provides a tire having an electronics patch that is positioned in a tire's architecture. A process for incorporating an electronics patch in a tire is also provided. Reference will now be made in detail to embodiments of this present invention, one or more examples of which are illustrated in the drawings. Each example is provided by way of explanation of the invention, and is not meant as a limitation of the invention. For example, features illustrated or described as part of one embodiment can be used with another embodiment to yield still a third embodiment. It is intended that the present invention include these and other modifications and variations.

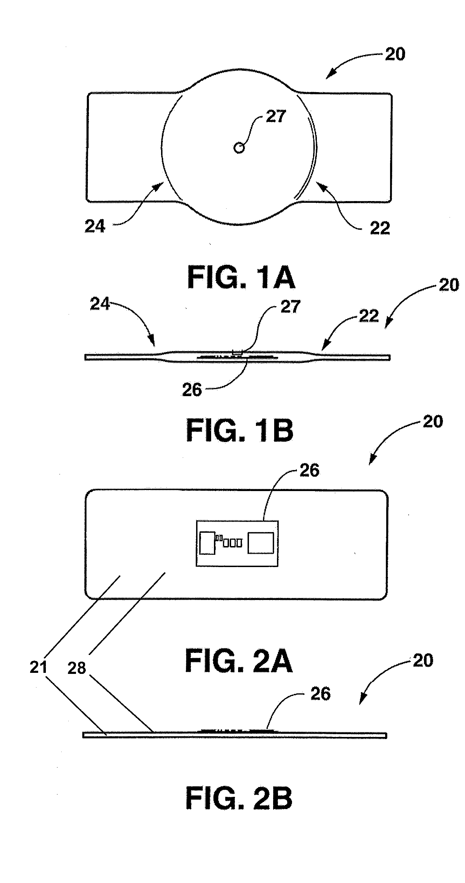

Figs. 1A and 1B illustrate an exemplary embodiment of an electronics patch 20 in accordance with the present invention. As shown, rubber patch 20 has slim profile that is conducive to integration within the architecture of a tire. Smooth transitions are used at, for example, intersections 22 and 24 to reduce stress concentrations that might otherwise occur during tire operation. The narrow profile of patch 20 facilitates the placement of the patch 20 underneath or between various layers or other structures within a tire's architecture as will be discussed.

Embedded within patch 20 is an electrical circuit 26 that may be configured for a variety of applications as identified above. Circuit 26 may include one or more measuring elements, identification elements, antennas, power sources, and other components. As illustrated in Figs. 1A and 1B, patch 20 includes a sensor 27 for measuring physical conditions in a tire and locations near patch 20.

Where one or more antennas are utilized with circuit 26, the materials used for the construction of patch 20 can be selected to enhance the effective transmission range of the electronics. As described in a previously filed application (filed on March 23, 2005, EP 05006386) owned by applicant's assignee and incorporated herein in its entirety by reference, radio frequency energy travels along the surface of an antenna. Where used with tires, the antenna must radiate radio frequency through the surrounding elastomeric materials from which tires are typically constructed. However, such materials are usually electrically conductive and have a relatively high dielectric constant, typically 3 or greater. Conductive material in contact with an antenna tends to dissipate the radio frequency energy traveling on the antenna surface. In addition, conductive dielectric material in contact with an antenna allows radio frequency current to pass between the two adjacent feed points of the antenna, also dissipating radio frequency energy. The problem of dissipation increases with the frequency, and is particularly troublesome at or above very high frequency (130 MHz) operation. Furthermore, placement of the antenna within a dielectric material such as tire elastomer materials causes significant changes in the resonance and impedance of the antenna, making the antenna appear longer from an electrical standpoint than when in free air. These problems can be avoided or minimized by embedding the antenna within a patch 20 that is constructed from an electrically insulating material having a low dielectric constant. By way of example only, it has been found that using a patch 20 constructed from a silica-reinforced elastomer or rubber, will improve transmission range substantially.

Preferably, patch 20 is also constructed from a material that is resistant to cracking and has a low modulus of elasticity. Such a construction may be preferable or required depending, for example, upon the intended location of patch 20 within the tire.

In Fig. 1, the electrical circuit 26 is embedded within the rubber patch 20. In such a case, the rubber patch is preferably only partially cured before incorporation in the tire in order to obtain a strong bond between the rubber of the tire materials and the rubber patch 20. Fig. 2 presents an alternate example. In Fig. 2, the rubber patch 20 comprises a sheet of rubber 21 and the electrical circuit 26 is attached by an adhesive to its surface 28. An adhesive is further applied on the exterior surface of the electrical circuit 26 and of the adjacent rubber sheet 21 before the incorporation of the patch in the tire. This adhesive coating ensures a strong bond with the materials of the tire after curing of the tire. The rubber sheet 21 may be only partially cured if the adhesive is not applied on both surfaces of the sheet 21. It may be also totally cured if the adhesive is applied on the whole of the surfaces of the rubber sheet 21.

The fact that the rubber sheet 21 of the patch 20 is at least partially cured before incorporation in the tire allows holding its shape during tire construction and curing.

Alternatively, rubber patch 20 may comprise a variety of materials in order to reinforce it or adjust its rigidity where necessary to provide a more rigid medium for circuit 26. The use of a more rigid material, such as rubber reinforced with rayon or aramid cords, may be preferable where it is necessary to maintain the profile of the circuitry 26 on patch 20. For example, where circuitry 26 includes an electromechanical transducer element, such as a piezoelectric, a particular alignment or orientation of patch 20 within the tire structure may be required. In short, depending upon the application, a variety of materials may be used for the construction of patch 20 with circuit 26 being embedded within patch 20 or positioned upon its surface 28. Other potential materials include, for example, aramid, polyester, polyimide, rayon, nylon, foam rubber, steel, and TEFLON®.

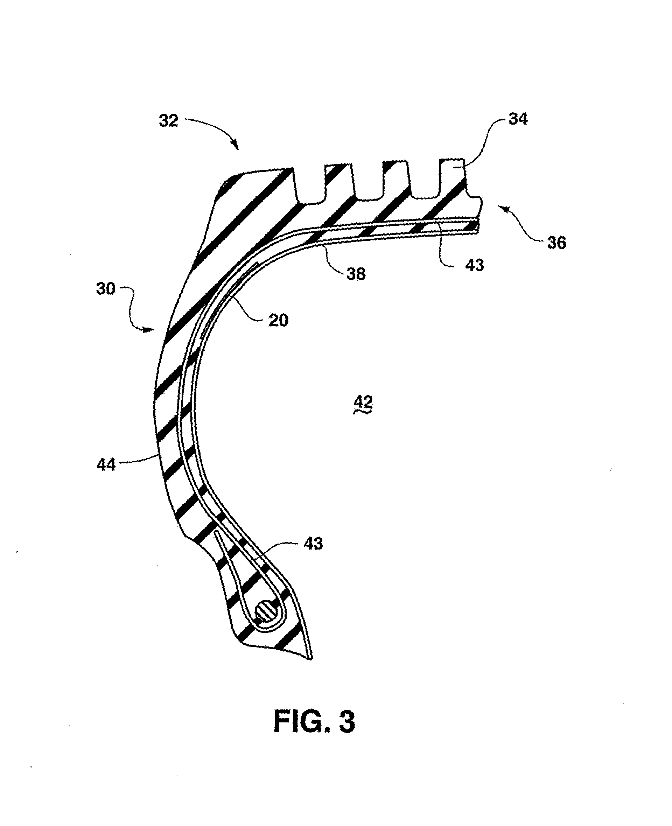

Fig. 3 illustrates an exemplary embodiment of the present invention in which patch 20 is incorporated into a sidewall portion 30 of a tire 32. In addition to sidewall portion 30, the structure (or architecture) of tire 32 includes a tread section 34 in crown 36. As shown, patch 20 is positioned under inner liner 38. Such position would be useful in measuring, for example, the air pressure in tire 32 directly through inner liner 38. The securing of patch 20 into sidewall portion 30 may by accomplished in a variety of ways as will be understood by one of ordinary skill in the art using the teachings disclosed herein. For example, patch 20 could be adhered with a temperature or pressure activated adhesive. By way of example, one such adhesive is sold under the CHEMLOK® brand name and is available from Lord Corporation, Chemical Products Division, 2000 West Grand View Boulevard, Erie, Pennsylvania. Alternatively, the material of patch 20 could be partially cross-linked before cure, and then fully bonded to the surrounding architecture of tire 32 during the curing process.

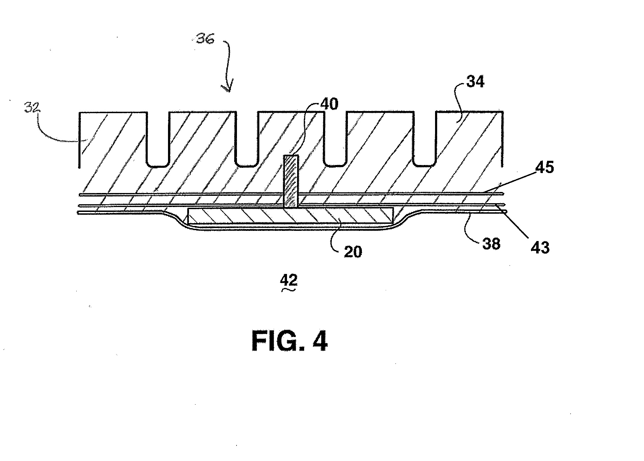

Another exemplary embodiment of the present invention is illustrated in Fig. 4. Here, patch 20 is positioned in crown 36 of tire 32 at a location between inner liner 38 and tread section 34. Patch 20 includes a sensor 40 extending through carcass 43 and crown reinforcement belts 45 into tread section 34, which could be used to measure temperature, force, strain, and other physical conditions of tire 32. Alternatively, sensor 40 could be exposed to air chamber 42 of tire 32 to measure pressure. Patch 20 could be secured into the position shown in Fig. 4 using a variety of methods as discussed with the exemplary embodiment of Fig. 3.

The present invention also provides a process or method for incorporating patch 20 into tire 32. In one exemplary embodiment, a method to construct tire 32 in accordance with the present invention includes the steps of providing a patch 20 that is configured for placement into tire 32. As part of this step and as previously described, patch 20 may be profiled to remove locations for stress concentrations; the material of construction may selected based on the modulus of elasticity required for the intended application; and the thickness and shape of patch 20 may be otherwise determined based on the application, location within the tire, and the amount of insulation required for circuit 26.

Next, a circuit 26 is incorporated with patch 20. This step may include embedding circuit 26 within patch 20 - as might be accomplished by placing circuit 26 between two strips of material that are then bonded or adhered to create patch 20. Alternatively, circuit 26 may be attached to the surface of patch 20 using, for example, an adhesive or other bonding method.

Where patch 20 is constructed from one or more elastomers, patch 20 may be either partially or fully cured prior to insertion into the structure of tire 32. For example, such a step might be employed where it is desired that patch 20 hold a particular shape during the construction and curing of tire 32 after inclusion of patch 20. Alternatively, as previously described, patch 20 may be constructed from a material that does not require a precuring step.

Patch 20 is then placed into the structure of tire 32 at a location determined by the particular application or measurements to be taken. As previously indicated, patch 20 is actually integrated within the structure of tire 32. While the above-described embodiments provide examples where patch 20 is placed under and adjacent to inner liner 38, it should be understood that the present invention also includes embodiments where patch 20 is placed at other locations within the structure of tire 32 that are not necessarily immediately adjacent to inner liner 38. By way of example only, referring to FIG. 3, patch 20 may be placed between carcass 43 and tread section 34, or between carcass 43 and side wall 44.

Upon positioning patch 20 as described, tire 32 is then cured as will be understood by one of ordinary skill in the art. The curing step will help secure the position of patch 20. Depending upon the materials used in the construction of patch 20, curing may also operate to further bond patch 20 to tire 32.

It should be understood that the present invention includes various modifications that can be made to the exemplary embodiments as described herein that come within the scope of the appended claims and their equivalents.

## Claims

1. A process for integrating an electronic device into a tire (32), comprising the steps of:
providing a rubber patch (20), said patch configured for placement within the tire;
providing an electrical circuit (26) for use with the tire;
incorporating said electrical circuit with said patch;
curing said patch at least partially;
embedding said patch within the architecture of the tire; and
curing the tire so as to provide an integrated structure that includes said patch and said tire.

2. A process according to claim 1, wherein said incorporating step comprises enclosing said electrical circuit (26) within said patch (20).

3. A process according to claim 1, wherein said incorporating step comprises attaching said electrical circuit (26) to the surface of said patch (20).

4. A process according to any one of claims 1 to 3, wherein said rubber patch (20) is comprised of a silica-reinforced elastomer.

5. A process according to any one of claims 1 to 4, wherein said rubber patch (20) further comprises one or more materials selected from the group consisting of aramid, polyester, polyimide, rayon, nylon, foam rubber, steel, fiberglass, and TEFLON®.

6. A process according to any one of claims 1 to 5, wherein said electrical circuit (26) includes an electromechanical transducer element.

7. A process according to any one of claims 1 to 6, wherein the tire (32) includes a plurality of layers, and wherein said embedding step comprises placing said patch (20) between adjacent layers.

8. A process according to claim 7, wherein the tire (32) includes an inner liner (38) and wherein said embedding step includes placing said patch (20) under and adjacent to the inner liner.

9. A process according to any one of claims 7 and 8, wherein the tire (32) includes a crown region (36) and a tread region (34), and wherein said embedding step includes placing said patch (20) within the crown region and adjacent to the tread region.

10. A process according to any one of claims 1 to 9, further comprising the step of applying an adhesive to said patch.

11. A tire (32) having integrated electronics, comprising:
a tire architecture that includes a pair of side wall portions (30), a crown section (36), and a tread section (34);
a rubber patch (20) enclosed within a portion of said tire architecture; and
an electrical circuit (26) incorporated with said patch.

12. A tire (32) having integrated electronics as in claim 11, wherein said electrical circuit (26) includes an electromechanical transducer element for converting mechanical energy into electrical energy.

13. A tire (32) having integrated electronics as in any one of claims 11 and 12, wherein said patch is positioned in said crown section.

14. A tire having integrated electronics as in any one of claims 11 to 13, wherein said patch is positioned in one of said pair of sidewall portions.

15. A tire having integrated electronics as in any one of claims 11 to 14, wherein said patch is bonded to said tire architecture.

16. A tire having integrated electronics as in any one of claims 11 to 15, wherein said patch is further constructed from one or more materials selected from the group consisting of silica-reinforced rubber, aramid, polyester, polyimide, rayon, nylon, foam rubber, steel, stainless steel, fiberglass, and TEFLON®.

17. A tire having integrated electronics as in any one of claims 11 to 16, wherein said patch is attached to said tire architecture with an adhesive.

18. An apparatus for use in incorporating electronics into a tire, comprising:
a rubber patch (30) having a slim profile, said patch made of a substantially electrically insulating material, said patch configured for being embedded inside of a tire;
an electrical circuit (26) carried by said patch, said electrical circuit configured for communicating with a remote location; and
wherein said patch reduces dissipation between said electrical circuit (26) and the tire (32) when said patch is embedded inside of the tire.

19. An apparatus as in claim 18, wherein said patch is made of a material having a substantially low relative dielectric constant.

20. An apparatus as in any one of claims 18 and 19, wherein said electrical circuit includes an antenna for use in communicating with a remote location, and wherein said electrical circuit includes a sensor for measuring at least one physical condition in the tire.
